# EUROPEAN PATENT SPECIFICATION

(11) **EP 1 387 283 B1**
(45) Date of publication and mention of the grant of the patent: **09.02.2005**
(21) Application number: 02016763.1
(22) Date of filing: 26.07.2002
(51) Int. Cl.: G06F 13/38, G06F 13/10

(54) **Method for operating and controlling data output of a man-machine interface unit**
Verfahren zum Verarbeiten und Steuern des Datenausgangs einer Mensch-Maschine Schnittstelle
Procédé de commande et de contrôle de la sortie de données d'un système d'interface homme-machine

(43) Date of publication of application: 04.02.2004
(73) Proprietor: Sony International (Europe) GmbH, 10785 Berlin (DE); EUROPEAN MEDIA LABORATORY GMBH, 69118 Heidelberg (DE)
(72) Inventor: Möhler, Gregor, c/oAdvanc. Techn. Center Stuttgart, 70327 Stuttgart (DE); Elting, Christian, European MediaLaboratory GmbH, 69118 Heidelberg (DE); Malaka, Rainer, c/oEuropean Media Laboratory GmbH, 69118 Heidelberg (DE)
(74) Representative: Müller - Hoffmann & Partner

(56) References cited:
- US-A- 5 968 116
- COOMANS M K D ET AL: "Towards a taxonomy of virtual reality user interfaces" , INFORMATION VISUALIZATION, 1997. PROCEEDINGS., 1997 IEEE CONFERENCE ON LONDON, UK 27-29 AUG. 1997, LOS ALAMITOS, CA, USA,IEEE COMPUT. SOC, US, PAGE(S) 279-284 XP010250388 ISBN: 0-8186-8076-8 * page 279 - page 284 *

## Description

The present invention relates to a method for operating and controlling data output of a man-machine interface unit, a system for operating and/or controlling a man-machine interface unit, a computer program product, and a computer readable storage medium.

Nowadays, many electronic appliances and network systems employ man-machine interface techniques to achieve a particular simple and reliable manner of operating and controlling said appliances and network systems by a customer or an user. Therefore, in many cases data output techniques are necessary to establish man-machine communication.

Known appliances and network systems have the major drawback that they are fixed and rigid with respect to given output devices in the sense that there is no flexibility with respect to an addition or a removal of output devices to or from the appliances or network systems.

It is therefore an object of the present invention to provide a method for operating and/or controlling data output of a man-machine interface unit with an increased flexibility with respect to possible rendering agents or output devices connected or connectable to said man-machine interface unit.

The object is achieved according to the invention by a method for operating and controlling data output of a man-machine interface unit according to the characterizing features of claim 1. The object is further achieved by a computer program product and a computer readable storage medium according to claims 18 and 19 respectively. Preferred embodiments are in each case within the scope of the dependent subclaims.

The inventive method for operating and controlling data output of the man-machine interface unit comprises first of all a process of generating, receiving and/or storing rendering agent data or output device data for at least one rendering agent or output device to be a part of and/or to be connected to said man-machine interface unit as a possible output destination or output device for output data. Further, a process of generating, receiving and/or storing output task data for output data to be output or rendered by said man-machine interface unit within at least one output task by means of at least one rendering agent or output device is provided. Finally a process of outputting or rendering output data with respect to said output task data for said at least one output task is performed. According to the invention the process of generating, receiving and/or storing said rendering agent data or output device data for a rendering agent or output device comprises a sub-process of registering a respective rendering agent or output device to be newly connected to said man-machine interface unit including steps of requesting and/or receiving service description data for said rendering agent or output device. Said service description data include, are adapted to contain or specify and/or are based on an output taxonomy. Further, said service description data include, are adapted to contain or to specify, and/or are based on at least one or an arbitrary plurality of the group of data comprising or describing respective sets of unimodal modalities, respective agent synchronization requirements, respective corresponding output devices and respective contents that can be rendered or output. Additionally, in the inventive method for operating and controlling data output of a man-machine interface unit the process of outputting or rendering output data is planned and/or performed based on said service description data of all rendering agents or output devices registered and/or connected to said man-machine interface unit.

It is therefore a key idea of the present invention to provide rendering agent data for a rendering agent at the first time said rendering agent registers and/or connects to the given man-machine interface unit. Upon receipt of output task data for at least one output task output data with respect to said at least one output task are rendered or output taking into account said rendering agents registered and/or connected to said man-machine interface unit. In the process of registering said rendering agents service description data for said rendering agent are requested and/or received. A further key-idea is that said service description data include, are adapted to contain or specify and/or are based on an output taxonomy and at least one or an arbitrary plurality of data of the group of data comprising or describing respective sets of unimodal modalities, respective agent synchronization requirements, respective corresponding output devices and respective contents that can be rendered or output. Before outputting or rendering said output data with respect to said at least one output task the process of outputting and/or rendering output data is planned. The planning process is based on said service description data, in particular for all rendering agents or output devices which are registered and/or connected to said man-machine interface unit.

As the method enables a registering process of rendering agents to be newly connected to the man-machine interface unit, in each step of the inventive method a maximum of flexibility is given with respect to changing situations by continuously registering and un-registering rendering agents. As the planning process takes into account in each case the service description data of all rendering agents or output devices currently registered and/or connected to said man-machine interface unit, an optimum output strategy may be derived in a particular flexible and reliable manner.

According to an embodiment of the present invention said service description data include, are adapted to contain or to specify, and/or are based on at the entirety of data of the group of data comprising or describing respective sets of unimodal modalities, respective agent synchronization requirements, respective corresponding output devices and respective contents that can be rendered or output.

In the foregoing and the following a rendering agent is referred to as an output device in an abstract sense. Therefore the process of rendering output data is referred to as a process of outputting said output data.

According to a preferred embodiment of the present invention the method for operating and controlling data output of a man-machine interface unit the sub-process of registering and in particular the steps of requesting and/or receiving said service description data involve or are performed in an output or presentation planning unit, in particular a multimodal output or presentation planning unit.

Said service description data can be based on or include different aspects, being descriptive for different situations or layouts for the entire system. For instance said service description data may therefore include or may be based on an output taxonomy. Further additionally said service description data may be adapted to contain or to specify respective agent synchronization requirements corresponding output devices and/or contents that can be rendered or output.

In the inventive method said taxonomy may advantageously be adapted to cover graphical, acoustic and/or haptic output modalities and/or media.

Further, said taxonomy may be or may comprise a Bernsen taxonomy.

Additionally or alternatively, a process of synchronization is carried out with unimodal modalities within a respective rendering agent and outside a respective rendering agent.

A further important an new aspect according to the present invention is the concept of rendering agent types. A rendering agent type is for instance a "talking head" or a particular "program selection GUI". It is specified by a minimal requirement based on the unimodal modalities and the rendering agent's internal synchronizations. Therefore, according to a further preferred embodiment of the present invention for each of said rendering agents a rendering agent type is determined and/or stored, in particular within said presentation planning unit. For instance, a talking head can represent a human conversational partner. The notions rendering agent type and rendering or render component type are used synonymously.

Additionally, for each of said rendering agents a presentation protocol may be determined and/or specified, in particular within said presentation planning unit or module, and in particular to be used in and/or for a presentation or output process.

Each of said presentation protocols may be built up by or may consist of at least one respective multimodal part and an unimodal part.

Further on, said output task data and/or said output task may be requested and/or received from a dialog managing unit or dialog manager, in particular by said presentation planning unit or module and/or in particular in an abstract manner.

Preferably, said process of generating, receiving and/or storing said rendering agent data and in particular the sub-process of registering a rendering agent are performed in an on-line or real-time manner in particular when a rendering agent is newly connected, incorporated and/or registered to a man-machine interface unit.

It is of further advantage when said output task and/or said output task data are requested and/or received from a dialog managing unit.

According to a further preferred embodiment of the present invention upon given output task data and/or upon a given output task a process of planning a rendering and/or output strategy is performed, in particular based on said rendering agent data for rendering agents already registered and/or connected to the man-machine interface unit, based on said output task data, based on said rendering agent type and/or based on said service description data.

In particular, said process of planning a rendering or output strategy may be performed flexibly by continuously taking into account registered and unregistered rendering agents and/or by continuously taking into account a plurality of rendering agents in particular having competing output capabilities with respect to given output tasks and/or by continuously combining a plurality of rendering agents, so as to jointly manage a given output task.

Said process of planning a rendering and/or output strategy may take into account presentation knowledge, in particular within and/or from said presentation planning unit or module. E.g., said presentation knowledge may be or may comprise information on how speech is used for salient information output.

Additionally or alternatively, said process of planning a rendering and/or an output strategy may generate and/or take into account layout protocols, unimodal rendering protocols and/or multimodal rendering protocols.

According to a alternative preferred embodiment of the present invention, said service description data for said rendering agents and/or for said output devices may comprise and/or take into account respective sets of unimodal modalities, respective possible synchronizations of said unimodal modalities, respective possible output devices and/or contents that can be rendered or output.

It is of a further advantage, when unimodal modalities are defined in an abstract way, in particular in accordance with a fixed taxonomy and/or ontology.

Additionally the inventive method may be adapted to handle rendering agents and/or output device which are unknown to the man-machine interface unit and in particular unknown the presentation planning unit.

According to another aspect of the present invention a system, apparatus or device is provided for operating and/or for controlling a man-machine interface unit, which is capable of performing or realizing the method for operating and/or controlling data output of a man-machine interface unit according to the present invention or steps thereof.

It is a further aspect of the present invention to provide a computer program product, comprising computer program means, adapted to perform and/or to realize the method for operating and/or for controlling data output of a man-machine interface unit according to the present invention or steps thereof.

Additionally, computer-readable storage medium is provided, comprising a computer program product according to the present invention.

These and further aspects of the present invention will be more elucidated taking into account the following remarks:

The present invention in particular proposes a service description and a method for the registration previously unknown rendering agents to a multimodal presentation planner. The service description may be based on an output taxonomy, furthermore it may specify the agent's synchronization requirements, the corresponding output devices and/or the content that can be rendered. The registration process may determine a rendering agent type and specify the protocol to be used in the presentation.

Until now, no flexible system is available which is capable to change its output strategy when a new device is plugged in (e.g. if a new graphical user interface (GUI) on a portable device is attached) or if various competing devices are attached (e.g. a GUI on a television screen and a GUI on a portable device). No rendering agents unknown to the system can be registered and no situation dependent strategy for a constant number of rendering agents is possible.

According to an embodiment of the present invention a dialog manager sends a general (i.e. abstract) output task to a presentation planner. The presentation planner knows about the existence of rendering agents currently registered in the system. Rendering agents can be registered at anytime. The presentation planner bases its output strategy (which content is displayed by which rendering agent in which way) and the protocol with the particular rendering agent on the service description that is provided by the rendering agent during its registration.

The rendering agent may describe its capacities or capabilities by the following characteristics: A set of unimodal modalities (e.g. speech synthesis and a text box), possible synchronizations of its unimodal modalities (e.g. speech synthesis can be synchronized with a talking head), its output device (e.g. a particular loudspeaker or a TV set) and contents that it can render (e.g. a particular GUI can only display program lists). The unimodal modalities may be defined in an abstract way in accordance with a fixed (but extensible) taxonomy and ontology.

These are possible output configurations of the system and examples of an appropriate output strategy within a home scenario. Other scenarios can be drawn in the automotive, mobile environment and any other environment in which rendering agents are attached to a multimodal system.
1. Dialog manager - presentation planner - GUI on the television set: The output of the current dialog step is sent to the GUI if the GUI is capable to present the content of the dialog manager (decision based on the content part of the service description)
2. Dialog manager - presentation planner - GUI on the television set & GUI on a mobile device: The output of the current dialog step is sent to the GUI on the television set if the user is in the room. It is displayed on the mobile device if the user leaves the room, if he is holding the mobile device and its GUI is capable to present the content of the dialog manager.
3. Dialog manager - presentation planner - GUI on the television set & speech synthesis: The output of the current dialog step is sent to the speech synthesis engine if it is salient information. Other information (like title lists) will be presented on the GUI.
4. Dialog manager - presentation planner - GUI on the television set & speech synthesis & anthropomorphic user interface assistant ("talking face"): The talking face is chosen, because the user's profile shows that the user favours to communicate with an anthropomorphic user interface assistant. The output of the current dialog step is sent to the speech synthesis engine if it is salient information. The lips of the talking face are synchronized with the speech output. Other information (like title lists) will be presented on the GUI. In this case the user assistant will refer to it using gesture and speech from the speech synthesis engine (e.g. saying "these are the titles").

As can be seen from the examples, it is possible to direct the output to the most appropriate component, output device or rendering agent based on the service description of the rendering agents. It is also possible to spread the output over multiple rendering agents or output devices. Furthermore the output can take into account situation dependency and the user's profile.

To apply psychological findings about presentations a particular rendering agent type is determined for each rendering agent as a whole. Each rendering agent type is specified by a minimal requirement based on the unimodal modalities and the rendering agent's internal synchronizations. A talking head can e.g. represent a human conversational partner. It is also possible to model rendering agents that are unknown to the presentation planner. In this case no rendering agent type can be exploited and the strategies are solely based on the unimodal description of the rendering agent.

The protocol between the presentation planner and the rendering agent is chosen based on the rendering agent type and the unimodal modalities that form the rendering agent type.

The main advantageous differences between the invention are:
- a flexible output strategy with various, possibly competing rendering agents based on the abstract service description of the rendering agents
- a dynamically changing output configuration and
- an ability to handle unknown rendering agents.

An additional elucidation of the invention and its background is given taking into account the following explanations:

With this invention a concept for an abstract modeling of output render components or rendering agents is presented. It is illustrated how this categorization serves to seamlessly integrate previously unknown output multimodalities or multimodal output modalities coherently into the multimodal presentations of a dialogue system. We present a case study and conclude with an overview of related work.

In the following the notions "rendering agent" and "render component" are used as synonyms. The same holds for the pairs of notions "rendering agent type", "render component type" and "rendering agent service description", "self-description", respectively.

The goal of the multimodal dialogue is to simplify the use of everyday devices like TV sets, VCRs, car radios or ATM machines. One of the major features of the system is that new hardware, e.g. a new TV set or a new PDA, or software, e.g. an animated tutoring agent, can be added dynamically to the system and are properly integrated into the architecture of the system. In order to make this possible it is crucial that the agents give a suitable description of themselves and their services.

This is especially true for agents that render multimodal output, e.g. a GUI, an animated avatar agent, a movie-player or a speech synthesis engine. Imagine that a user switches on his PDA, which is automatically connected to the system, e.g. by wireless LAN. The PDA provides a GUI as a new multimodal output module that can render low-resolution pictures and movies as well as display graphic text. In order to be integrated into the presentation planning process the presentation planning agent PMO (polymodal output module,) must have a notion of what type of multimodal output the PDA's GUI produces (e.g. graphic or acoustic output, static or dynamic output). Moreover it has to know which types of content the rendering module can process (e.g. abstract concepts, gesture annotations, movie files). In order to be able to adapt the presentation context-dependently it is also important for the PMO to know how the output is rendered with respect to resource restrictions (e.g. concerning screen resolution or volume), on which device the output is rendered and where the device is located.

### Modeling unimodalities and the Bernsen taxonomy

The self-description of multimodal render components is based on the modality theory of unimodal output modalities (which are referred to as unimodalities here) as introduced by Bernsen. The Bernsen model or Benrsen taxonomy is chosen because it provides a convenient way to group unimodalities according to their presentation properties. In this way a presentation planner can apply similar output strategies to similar unimodalities.

The Bernsen taxonomy is based on a set of basic properties and three media. These are: linguistic/non-linguistic (li/-li feature), analogue/non-analogue (an/-an), arbitrary/non-arbitrary (ar/-ar), static/dynamic (sta/dyn) and acoustic/graphic/haptic (aco/gra/hap). Given the four basic properties and the media we can generate a full table containing 48 different "generic" modalities. After performing practically motivated reductions the resulting table comprises 20 modalities.

The resulting taxonomy is grouped into four categories forming the so-called "super level": linguistic (all modalities containing the li feature), analogue (all modalities with (-li, an) features), arbitrary (all modalities with (-li, -an, ar) features) and explicit (all modalities with (-li, -an, -ar) features). Explicit modalities refer to modalities that carry structural meaning, e.g. to provide some grouping information.

The level below the super level is called the "generic level". It spans a tree based on all features not yet fixed by the super level. The generic level comprises all of the 20 original unimodalities that Bernsen identified.

Further splitting of the taxonomy seems to be necessary for some of the generic categories to distinguish important aspects of the modalities. This leads to what Bernsen calls the atomic and sub-atomic levels. These levels do not use global parameters, but are modality-specific. They can be extended whenever an application or technology requires it.

### Description and self-description of render components or rendering agents

In our framework a render component describes itself primarily by the multimodality that it represents. The multimodality is regarded as a set of unimodalities. Additionally the render component provides information about the synchronization each unimodality requires, the content that it can handle and the device it uses. References to presentation objects of other render components or to world objects are not discussed in this invention.

### Multimodal description

Following Bernsen, a multimodality is modeled as a set of unimodalities. Every unimodality is in turn described by a feature vector consisting of the basic unimodality properties and the media.

Since certain multimodalities would fall into the same category, we extend the feature vector by an additional feature. This feature corresponds to a fusion of Bernsen's atomic and sub-atomic layer. It enables us to distinguish between unimodalities that are similar, but must be handled differently in the presentation planner.

For the linguistic categories we use text and labels as discriminating features, which is consistent with Bernsen's proposals. A text has unrestricted expressiveness, whereas a label is a brief expression (e.g. a textual label in a graph). Another property that splits the modalities of the linguistic super level according to Bernsen is the distinction between spoken graphic text and written graphic text. Spoken graphic text e.g. concerns lip movements that convey language without using text explicitly. The sub-atomic layer of the Bernsen's taxonomy can further be used to distinguish between gestures and mimics.

Having laid out the general framework let us now turn to some representative multimodalities of the scenario illustrating the multimodality modeling.

An avatar is an animated character that can render lip movements synchronously with speech of a synthetic or natural voice. His face can possibly express mimics. If implemented with a complete body it can use its hands for gestures. Other movements of the body (like walking) are possible as well. These unimodalities are described as follows:
lip movements: (li, -an, -ar, dyn, gra, SPOKEN_TEXT)
gestures: (li, an, -ar, dyn, gra, GESTURAL_LABELS)
mimics: (li, an, -ar, dyn, gra, MIMIC_LABELS)
body movements: (-li, an, -ar, dyn, gra)

Let us add the description of the sign language used by many hearing impaired persons before we discuss the usage of the additional features:
sign language: (li, an, -ar, dyn, gra, GESTURAL_TEXT)

Without the additional categories GESTURAL_LABELS, MIMIC_LABELS and GESTURAL_TEXT the category (li, an, -ar, dyn, gra) would apply to gestures, mimics & sign language underlining the similarity between them. However, for a presentation planner it is necessary to differentiate between those three. It makes for instance a considerable difference for the user and for the presentation if content is rendered as mimics instead of sign language. We have used the distinction between text and labels on the one side and between gestures and mimics on the other side. In our case sign language could be regarded as a text modality, whereas gestures and mimics serve as labels conveying simple information such as "in focus" (deictic gestures) or "happy" (emotion expressed by mimics). The sub-atomic layer of Bernsen's taxonomy is used to distinguish between gestures and mimics.

We further consider a program selection GUI that has the possibility to render images, free-text and a list of items (like film or music titles). The representations of the corresponding unimodalities are
images: (-li, an, -ar, sta, gra)
free-text: (li, -an, -ar, sta, gra, WRITTEN_TEXT)
list-text: (li, -an, -ar, sta, gra, WRITTEN_TEXT)

Note that the list-text is presented in a unimodal view here. In principle it can also be understood as being bi-modal consisting of the linguistic unimodality (li, -an, -ar, sta, gra) and the explicit modality (-li, -an, -ar, sta, gra) forming the list structure. List-text and free-text unimodalities fall into the same category, suggesting that they are used in the same way. We will see later how those two unimodalities can be distinguished if required.

A simple render component that can emit an acoustic alarm can be described as
alarm signal: (-li, -an, ar, sta, aco).

Another possible render component is a scroll-text render component that horizontally renders text in a one line window:
scroll-text: (li, -an, -ar, dyn, gra, WRITTEN_TEXT).

The differentiation written vs. spoken is used to split the modalities lip movements and scroll-text that originally belonged to the same category.

### Modality synchronizations

Each of the unimodalities that build up the multimodal render component has special synchronization capabilities concerning other unimodalities. A unimodal lip movements render component for instance might be able to synchronize with a unimodal speech synthesis render component, but not with a render component for static graphic text. This information is necessary for the PMO in order to be able to trigger the synchronizations that have to be conducted for the multimodal presentation.

To further specify the synchronization information we introduce a "THIS"-operator, which serves to mark synchronizations that only take place within the prevailing multimodality. Therefore the expression
THIS.(li, an, -ar, dyn, gra, GESTURAL_LABELS)
for the mimic unimodality of an avatar multimodality indicates that synchronizations with gestures unimodalities only take place within the avatar multimodality. Specifying the internal synchronization as well enables the presentation planner to get a picture of the internal organization of the render component.

### Device assignment

In order to model multimodal render components it is also necessary to take care of the resource restrictions of the corresponding output device (e.g. screen resolution). To do so each unimodality is assigned a dedicated device (e.g. a TV screen). This device has certain resource restrictions that depend on the medium in which the unimodality renders.

### Content description

Apart from the multimodality description, the synchronizations and device assignments it is also necessary for the PMO to know which kind of content a particular unimodality is able to render. Imagine for instance a unimodal list-text render component that is only able to render simple, list-structured content as compared to a free-text render component which can render any type of text content.

### Modeling multimodal render components

This section describes in which way the presentation planner PMO uses the self-description of a particular render component to model its output behavior. The internal model is based on the notion of a render component type, which is described first. Furthermore we discuss which protocol is used as the interface between the presentation planner and the render component.

### Render component type or rendering agent type

Many aspects of a render component can be modeled using just the properties of unimodalities. However it is not yet possible (without further inferences) to apply for instance presentation knowledge that concerns the render component as a whole. It is for instance important for the presentation planner to know that the avatar can act as a communication partner for the user. To incorporate this knowledge into the presentation planner we introduce the notion render component type. Each render component type is defined by a set of minimal requirements necessary to model the render specific psychological knowledge.

For our purpose we have defined three render component types: The avatar, the program selection GUI and the speech synthesis type.

The characteristics of an avatar render component are its ability to serve as a communication partner. We believe that in most cases this role can only be filled out realistically if an avatar is composed of the unimodalities mimics and lip movements, which is why we define them as a minimal requirement for the avatar render component. Body motion and gestures are optional unimodalities. As an additional requirement mimics, lip movements and gestures must synchronize with each other and must have the ability to be synchronized with an external speech unimodality. This definition of an avatar render component intentionally excludes characters that cannot move their lips synchronously to an external voice source. Also avatars that are not capable to express mimics are not modeled as avatar render component by our presentation planner, because we consider feedback expressed by mimics as an essential property of the avatar. The definition of the avatar given here is of course domain-dependent in a way: Other applications may want to model avatars with smaller capabilities resp. stricter requirements and would, therefore, use a different definition.

The same holds for the other render component types: the program selection GUI render type is defined as to contain at least one text unimodality of the Bernsen category (li, -an, -ar, sta, gra) that is capable of displaying list items.

The speech synthesis render type is defined by the existence of at least a speech (li, -an, -ar, dyn, aco, SPOKEN_TEXT) unimodality capable to be synchronized with other dynamic modalities.

### Protocol description

In the method and system a protocol consists of an information flow of several KQML messages and DTDs for the XML-content of each message.

Two different protocols are defined between the between the presentation planner and the render component. The layout of graphical render components is coordinated in the layout protocol. The content to be rendered is defined by the setup protocol.

The setup message contains multimodal and unimodal information as well as amodal content. Multimodal information concerns the multimodality as a whole like an "avatar character"-parameter in case of the avatar multimodality. This part of the message is specific for a particular render component type. Unimodal information covers unimodality-specific concepts like unimodal parameters or synchronization triggers. Finally the setup protocol also specifies the amodal content that each unimodality should render.

If a multimodality cannot process a certain setup message (e.g. because the content to be displayed does not fit the corresponding screen) it sends back an error message indicating the reason for the error. The presentation planner can then try to provide a different setup (e.g. with a reduced content) with the help of the dialogue manager.

If the multimodal type of a render component could not be determined the PMO tries to follow a standard protocol. This protocol would only cover the unimodal information as well as the amodal content. If this also fails then the PMO is not able to use this render component for future multimodal outputs.

### Case Study

In the following, two examples of how the render component model could be used by the presentation planning agent to direct the multimodal output of the system are provided. The first one uses render components with types known to the PMO, the second one uses a render component with of unknown type.

### Avatar, GUIs and speech synthesis

Three output multimodalities are present in the system. One is an avatar consisting of the unimodal render components mimics, gestures and lip movements. Then there is a GUI containing a list-text component and a free-text component. A speech synthesis engine generates the speech output of the avatar based on conceptual input. It includes a text generation part to fulfill this task.

### Render component rendering agent description

The GUI-type multimodality is modeled as displayed in table 1. As a matter of fact both unimodalities only differ with respect to the content that they can process. The list-text component can only process simple content in list form (like TV show titles, genres etc.) whereas the free-text component can render any concept into text. Both unimodalities need not to be synchronized with others as they are static render components. However according to the device assignments a layout coordination has to take place between both components as both of them display information on the same device.

**Table 1:**

| Self-description of the GUI render component. | |
|---|---|
| List-text unimodality | |
| Category | (li, -an, -ar, sta, gra, WRITTEN_TEXT) |
| Content | <ListItem> |
| Synchronizations | - |
| Device | TV1.screen |

| Free-text unimodality | |
|---|---|
| Category | (li, -an, -ar, sta, gra, WRITTEN_TEXT) |
| Content | 'arbitrary' |
| Synchronizations | - |
| Device | TV1.screen |

The avatar-type multimodality consists of three unimodalities namely mimics, gestures, and lip movements (table 2). The mimics and gestures unimodalities differ in their subcategories "gestural labels" resp. "mimic labels".

**Table 2:**

| Self-description of the avatar render component | |
|---|---|
| Gestures unimodality | |
| Category | (li, an, -ar, dyn, gra, GESTURAL_LABELS) |
| Content | 'arbitrary' |
| Synchronizations | THIS.(li, an, -ar, dyn, gra, MIMIC_LABELS) THIS.(li, -an, -ar, dyn, gra, SPOKEN_TEXT) (li, -an, -ar, dyn, aco, SPOKEN_TEXT) |
| Device | TV1. screen |

| Mimics unimodality | |
|---|---|
| Category | (li, an, -ar, dyn, gra, MIMIC_LABELS) |
| Content | 'arbitrary' |
| Synchronizations | THIS.(li, an, -ar, dyn, gra, GESTURAL_LABELS) THIS.(li, -an, -ar, dyn, gra, SPOKEN_TEXT) (li, -an, -ar, dyn, aco, SPOKEN_TEXT) |
| Device | TV1. screen |

| Lip movements unimodality | |
|---|---|
| Category | (li, -an, -ar, dyn, gra, SPOKEN_TEXT) |
| Content | 'arbitrary' |
| Synchronizations | THIS.(li, an, -ar, dyn, gra, GESTURAL_LABELS) THIS.(li, an, -ar, dyn, gra, MIMIC_LABELS) (li, -an, -ar, dyn, aco, SPOKEN_TEXT) |
| Device | TV1. screen |

The synchronizations in table 2 indicate that the mimics, gestures and lip movements render components synchronize themselves within the avatar render component. Moreover each render component can be synchronized with an external speech synthesis unimodality (li, -an, -ar, dyn, aco, SPOKEN_TEXT). All three unimodalities render output on the device TV1.screen and, therefore, have to perform layout coordinations. All unimodalities can process any type of amodal content defined in the method and system. However the "mimic label" and the "gestural label" categories indicate that those render components also need special unimodality-specific information specifying when and what type of gestures or mimics should take place.

The speech synthesis render component consists of a single unimodal speech render component as shown in table 3. The speech render component can be synchronized with any other dynamic render component.

**Table 3.**

| Self-description of the speech synthesis render component. | |
|---|---|
| Speech unimodality | |
| Category | (li, -an, -ar, dyn, aco, SPOKEN_TEXT) |
| Content | 'arbitrary' |
| Synchronizations | (*, *, *, dyn, *) |
| Device | TV1.loudspeaker |

### Presentation Planning

When the render component with the unimodalities mimics, gestures and lip movements connects to the method and system the PMO identifies it as an avatar-type render component since it meets the corresponding requirements as mentioned above. The render component with the unimodalities list-text and free-text is recognized as a program selection GUI type render component. The third render component is recognized as a render component of type speech synthesis.

As the user profile indicates that the user is a beginner and that he prefers to work with the system's avatar the PMO chooses to present the titles statically by the list-text component of the program selection GUI and additionally chooses the avatar to present the titles by speech and proper gestures. In principle the list could also be presented on the free-text component. However, the PMO assumes that the list-text GUI is more specialized due to its description.

The next step for the PMO is to determine the appropriate protocol for each of the three render components. The rendering parameters in the setup protocol are set for each multimodality.

In this example the multimodal parameters that have to be set by the PMO are the emotion to be expressed by the avatar, the avatar character and the look-and-feel of the GUI.

In the unimodal part of the protocol the PMO specifies an abstract text font-size ('small', 'medium' or 'large') for the list-text unimodality. The speech unimodality needs voice and text complexity as parameters. Additionally each unimodality that is part of the output needs information about the synchronizations and layout coordinations that have to be conducted with other unimodalities. Therefore, the PMO initiates synchronizations within the mimics, gestures, lip movements and the speech synthesis unimodalities. As the list-text unimodality is static it carries out no synchronizations. Layout coordinations are sent to all graphical unimodalities: mimics, gestures, lip movements and the list-text unimodality.

Any unimodality will have access to the same amodal content that has to be rendered. In case of the gestures unimodality the content is annotated with gesture information concerning the types of gestures that have to be rendered as well as the intensities of the gestures. The mimics render component expects content enhanced with mimics information. The lip movements render component will not use the PMO's amodal content at all, since its main source of information is provided by the synchronization protocol with the speech synthesis render component.

### Multimodalities of unknown type

As mentioned before it is also possible to include multimodalities into the presentation planning process whose render component type is not recognized by the PMO. Imagine for instance a special purpose GUI for people with impaired hearing that consists of a lip movements render component and a scroll-text render component that can display the text the lips are speaking.

As this multimodality is not recognized by the PMO (because it does not model GUIs without a list-text unimodality) it treats this render component as an unknown type. As a consequence no multimodal parameters can be set for this GUI. Moreover it is not known, which protocol this GUI uses and a standard protocol is assumed. However the PMO can still derive information from the unimodality categories of the render component, which identifies the lip movements and the scroll-text render components. As the presentation knowledge of the PMO indicates that a lip movements unimodality is suitable for people with hearing impairment and that it is recommendable to accompany graphic spoken text render components either by speech or by graphic written text the PMO chooses to also use the scroll-text unimodality and to synchronize both unimodalities.

### Conclusion

With this invention a new approach to model multimodal render components or rendering agents in a dialogue system is proposed. The components of the model are explained and it is illustrated how it will be used for the automatic insertion of new rendering agents into a system's multimodal presentation. This includes render components or rendeing agents of unknown type.

In the current framework the presentation planner has no particular means to choose among similar render components. If a render component could come up with a measurement of the output quality based on a particular content it would further simplify the decision to choose the most suitable render component.

In the following the invention will be explained in more detail by taking reference to the accompanying figures presenting preferred embodiments of the inventive method for controlling and/or operating data output of a man-machine interface unit.
- **Fig. 1**: is a schematical block diagram describing a first embodiment of the inventive method for operating and controlling data output of a man-machine interface unit.
- **Fig. 2A, B**: are schematical block diagrams describing the information flow according to different sub-processes of a preferred embodiment of the inventive method for operating and controlling data of a man-machine interface unit.

In the following, identical or comparable structures, elements and processes having comparable or identical configurations or affects are designated by identical reference symbols.

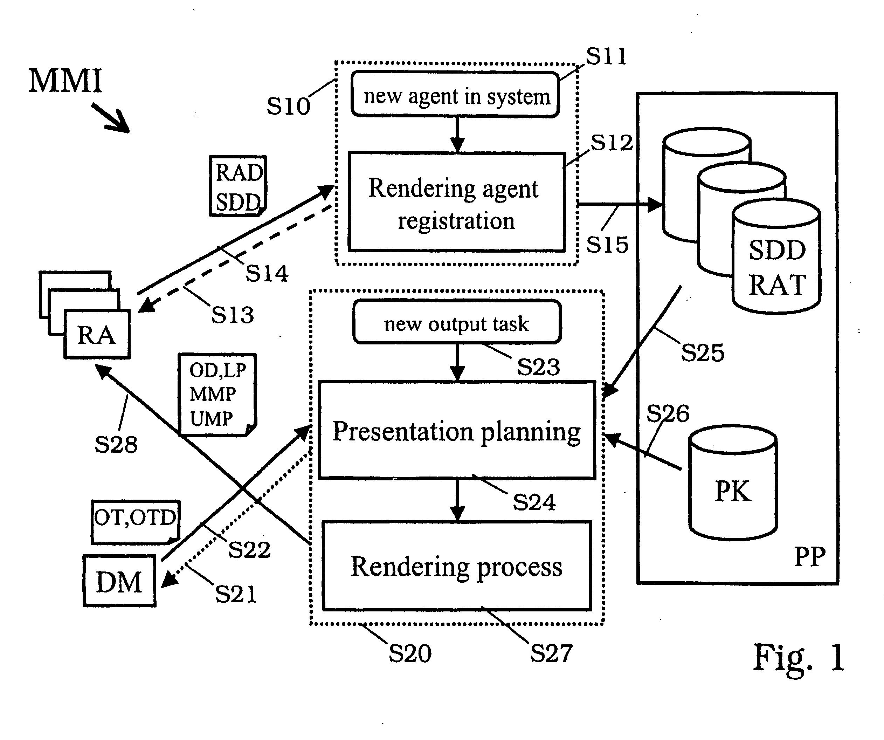

Fig. 1 is a schematical block diagram describing a preferred embodiment of the inventive method for operating and/or controlling data output of a man-machine interface unit MMI.

First of all, there is provided a plurality of rendering agents RA which may serve as output devices for a given man-machine interface unit MMI. When establishing a new connection of a given rendering agent RA to said man-machine interface unit MMI according to a first step S11 of a process S10 of generating, receiving and/or storing rendering agent data RAD said rendering agent data RAD in the sense of served description data SDD are requested S13 and in turn transmitted or received S14 from said rendering agent RA to be registered and/or to be connected to said man-machine interface unit MMI. Upon receipt of said served description data SDD and said rendering agent data RAD from said rendering agent RA and a step of registering S12 said rendering agent, said rendering agent SAD and in particular said service description data SD are stored according to step S15 in a data base of a presentation planning unit PP together with rendering agent type data RAT derived in the step of rendering agent registration S12.

On the other hand a dialog managing unit or a dialog manager DM is provided and connected, for instance as a part, to said man-machine interface unit MMI. If a new output task OT is determined according to step S23 of the section S27 of generating, receiving and/or storing output task data OTD upon requesting S21 said dialog manager submits said output task OT or said output task data OTD belonging to said output task OT to the man-machine interface unit MMI upon the receipt of which the process of presentation planning S24 is performed, taking into account the service description data SDD, the rendering agent type data RAD of the rendering agent registered to said man-machine interface unit MMI and on presentation knowledge PK, each of which are received in receiving processes S25 and S26 from said presentation planning unit PP. The result of the step S24 of presentation planning is an output strategy within a rendering process S27 upon which one or a plurality of rendering agents RA are selected and provided with output data for said output task OT or derivatives thereof, together with layout protocol data LP, unimodal rendering protocols UMP and multimodal rendering protocols MMP. Upon receipt of these data the respective rendering agent or the respective rendering agents RA perform a rendering or output of said output data OD.

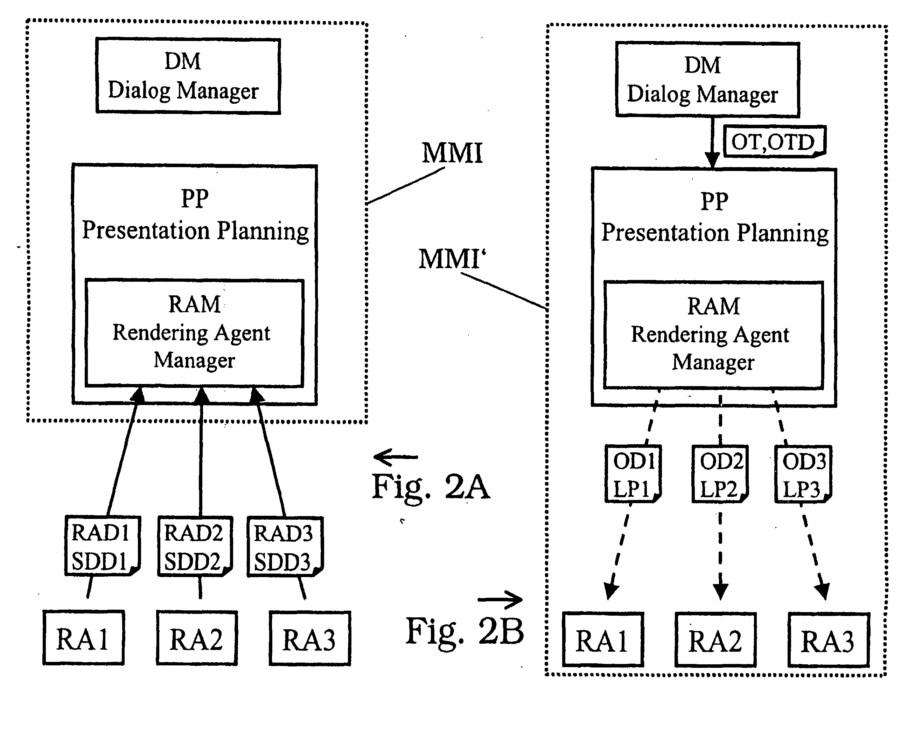

Fig. 2A and 2B show the information flow between rendering agents RA1 to RA3 registered or to be registered to a man-machine interface unit MMI in a process of registering according to Fig. 2A and in a process of rendering output data according to Fig. 2B, respectively.

In Fig. 2A a presentation planning unit PP is shown which contains or comprises a rendering agent managing section RAM. Additionally, rendering agents RA1 to RA3 are shown. To register said rendering agents RA1 to RA3 said rendering agents RA1 to RA3 submit there respective service description data SDD1 to SDD3 to the rendering agent management unit or section RAM of said presentation planning unit PP of said man-machine interface unit MMI. Upon registering said rendering agents RA1 to RA3 they become possible output devices within a modified man-machine interface unit MMI' which is shown in Fig. 2B. After receipt of an output task OT together with output task data OTD from a dialog managing unit DM or a dialog manager DM within said man-machine interface unit MMI, MMI' the presentation planning unit PP generates an output strategy and finds the best combination of rendering agents RA1 to RA3 to render output data OD.

## Claims

1. Method for operating and controlling data output of a man-machine interface unit,
comprising the processes of:
- generating, receiving (S10, S12, S14) and/or storing (S15) rendering agent data (RAD) or output device data for at least one rendering agent (RA) or output device to be a part of and/or to be connected to said man-machine interface unit (MMI) as a possible output destination or device for output data (OD),
- generating, receiving (S20, S22) and/or storing output task data (OTD) for output data (OD) to be output or rendered by said man-machine interface unit (MMI) within at least one output task (OT) by means of at least one rendering agent (RA) or output device, and
- outputting or rendering (S27, S28) output data (OD) with respect to said output task data (OTD) for said at least one output task (OT),
- wherein the process of generating, receiving (S10, S12, S14) and/or storing (S15) said rendering agent data (RAD) or output device data for a rendering agent (RA) or output device comprises a sub-process of registering (S12) a respective rendering agent or output device to be newly connected to said man-machine interface unit (MMI) including steps of requesting (S13) and/or receiving (S14) service description data (SDD) for said rendering agent (RA) or output device,
- wherein said service description data (SDD) include, are adapted to contain or specify and/or are based on an output taxonomy,
- wherein said service description data (SDD) include, are adapted to contain or to specify, and/or are based on at least one or an arbitrary plurality of data of the group of data comprising or describing respective sets of unimodal modalities, respective agent synchronization requirements, respective corresponding output devices and respective contents that can be rendered or output, and
- wherein the process of outputting or rendering (S27, S28) output data (OD) is planned (S24) and/or performed (S27, S28) based on said service description data (SDD) of all rendering agents or output devices registered and/or connected to said man-machine interface unit (MMI).

2. Method according to claim 1,
wherein said service description data (SDD) include, are adapted to contain or to specify, and/or are based on at the entirety of data of the group of data comprising or describing respective sets of unimodal modalities, respective agent synchronization requirements, respective corresponding output devices and respective contents that can be rendered or output.

3. Method according to claim 1,
wherein the sub-process of registering (S12) and in particular the steps of requesting (S13) and/or receiving (S14) said service description data (SDD) involve or are performed in an output or presentation planning unit (PP), in particular a multimodal output or presentation planning unit (PP).

4. Method according to any one of the preceding claims,
wherein said taxonomy is adapted to cover graphical, acoustic and/or haptic output modalities and/or media.

5. Method according to any one of the preceding claims,
wherein said taxonomy is or comprises a Bernsen taxonomy.

6. Method according to any one of the preceding claims,
wherein a process of synchronization is carried out with unimodal modalities within a respective rendering agent (RA) and outside a respective rendering agent (RA).

7. Method according to any one of the preceding claims,
wherein for each of said rendering agents (RA) a rendering agent type (RAT) is determined and/or stored, in particular within said presentation planning unit (PP).

8. Method according to any one of the preceding claims,
wherein for each of said rendering agents (RA) a presentation protocol is determined and/or specified, in particular within said presentation planning unit (PP), to be used in and/or for a presentation or output.

9. Method according to any one of the preceding claims.
wherein for each of said presentation protocols is built up by or consists of at least one respective multimodal part and an unimodal part.

10. Method according to any one of the preceding claims,
wherein said output task data (OTD) and/or said output task (OT) are requested (S21) and/or received (S22) from a dialog managing unit (DM), in particular by said presentation planning unit (PP) and/or in particular in an abstract manner.

11. Method according to any one of the preceding claims,
wherein said process of generating, receiving and/or storing said rendering agent data (RAD) and in particular the sub-process of registering (S12) a rendering agent (RA) is performed in an on-line manner and/or real time manner, in particular when a rendering agent (RA) is newly connected or incorporated to said man-machine interface unit (MMI).

12. Method according to any one of the preceding claims,
wherein upon given output task data (OTD) or a given output task (OT) a process of planning (S26) a rendering or output strategy is performed, in particular based on said rendering agent data (RAD) for registered rendering agents (RA), based on said output task data (OTD), said rendering agent type (RAT) and/or said service description data (SDD).

13. Method according to any one of the preceding claims.
wherein in said process of planning (S26) a rendering or output strategy is performed flexibly by continuously taking into account registered and unregistered rendering agents (RA) and/or by continuously taking into account a plurality of rendering agents (RA) in particular having competing output capabilities with respect to given output tasks (OT) and/or by continuously combining a plurality of rendering agents (RA), so as to jointly manage a given output task (OT).

14. Method according to any one of the claims 12 or 14,
wherein said process of planning (S26) a rendering and/or output strategy takes into account presentation knowledge (PK).

15. Method according to any one of the claims 12 to 14,
wherein said process of planning (S26) a rendering and/or output strategy generates and/or takes into account layout protocols (LP), unimodal rendering protocols (UMP) and/or multimodal rendering protocols (MMP).

16. Method according to any one of the preceding claims,
wherein unimodal modalities are defined in an abstract way, and in particular in accordance with a fixed taxonomy and/or ontology.

17. Method according to any one of the preceding claims,
which is adapted to handle rendering agents (RA) and/or output device which are unknown to the man-machine interface unit (MMI) and in particular unknown the presentation planning unit (PP).

18. Computer program product,
comprising computer program means adapted to perform and/or to realize the method for operating and controlling data output of a man-machine interface unit according to any one of the claims 1 to 17 and/or the steps thereof, when it is executed on a computer, a digital signal processing means, and/or the like.

19. Computer readable storage medium,
comprising a computer program product, according to claim 18.

## Patentansprüche

1. Verfahren zum Durchführen und zum Steuern der Datenausgabe einer Mensch-/Maschineschnittstelleneinheit, mit:
- einem Prozess des Erzeugens, Empfangens (S10, S12, S14) und/oder des Speicherns (S15) von Wiedergabeagentendaten (RAD) oder Ausgabegerätedaten für mindestens einen Wiedergabeagenten (RA) oder ein Ausgabegerät als Teil einer und/oder verbunden mit einer Mensch-/Maschineschnittstelleneinheit (MMI) als möglichem Ausgabeziel oder als möglichem Gerät für Ausgabedaten (OD),
- einem Schritt des Erzeugens, Empfangens (S20, S22) und/oder des Speicherns von Ausgabeaufgabedaten (OTD) für Ausgabedaten (OD), die auszugeben oder wiederzugeben sind durch die Mensch/Maschineschnittstelleneinheit (MMI) innerhalb mindestens einer Ausgabeaufgabe (OT), und zwar mittels des mindestens eines Wiedergabeagenten (RA) oder des mindestens einen Ausgabegeräts, und
- einen Prozess des Ausgebens oder Wiedergebens (S27, S28) von Ausgabedaten (OD) in Bezug auf die Ausgabeaufgabedaten (OTD) für die mindestens eine Ausgabeaufgabe (OT),
- wobei der Prozess des Erzeugens, Empfangens (S10, S12, S14) und/oder des Speicherns (S15) der Wiedergabeagentendaten (RAD) oder der Ausgabegerätedaten für einen Wiedergabeagenten daten für einen Wiedergabeagenten (RA) oder für ein Ausgabegerät einen Unterprozess des Registrierens (S12) eines jeweiligen Wiedergabeagenten oder eines jeweiligen Ausgabegeräts aufweist, wobei letztere neu mit der Mensch-/Maschineschnittstelleneinheit (MMI) verbunden werden sollen, wobei der Unter-Prozess Schritte aufweist des Anforderns (S13) und/oder des Empfangens (S14) von Servicebeschreibungsdaten (SDD) für den Wiedergabeagenten (RA) und/oder für das Ausgabegerät,
- wobei die Servicebeschreibungsdaten (SDD) eine Ausgabetaxonomie enthalten, ausgebildet sind diese aufzuweisen, spezifizieren und/oder auf dieser basieren,
- wobei die Servicebeschreibungsdaten (SDD) mindestens eine Datengruppe aus der folgenden Gruppe von Daten enthalten, ausgebildet sind, diese aufzuweisen, spezifizieren und/oder auf dieser basieren, wobei die Gruppe von Daten enthält oder beschreibt jeweilige Mengen oder Sätze unimodaler Modalitäten, jeweilige Agentensynchronisationsanforderungen, jeweilige korrespondierende Ausgabegeräte und jeweilige Inhalte, die wiedergegeben oder ausgegeben werden können, und
- wobei der Prozess des Ausgebens oder Wiedergebens (S27, S28) der Ausgabedaten (OD) geplant (S24) und/oder ausgeführt (S27, S28) wird auf der Grundlage der Servicebeschreibungsdaten (SDD) sämtlicher Wiedergabeagenten oder Ausgabegeräte, die im Hinblick auf die Mensch-/Maschineschnittstelleneinheit (MMI) registriert und/oder mit dieser verbunden sind.

2. Verfahren nach Anspruch 1,
bei welchem die Servicebeschreibungsdaten (SDD) die Gesamtheit von Daten der nachfolgenden Gruppe von Daten umfasst, ausgebildet sind, diese aufzuweisen, diese spezifizieren und/oder auf dieser basieren, wobei die Gruppe von Daten umfasst oder beschreibt jeweilige Mengen oder Sätze unimodaler Modalitäten, jeweilige Agentensynchronisationsanforderungen, jeweilige korrespondierende Ausgabegeräte und jeweilige Inhalte, die wiedergegeben oder ausgegeben werden können.

3. Verfahren nach Anspruch 1,
bei welchem der Unterprozess des Registrierens (S12) und insbesondere die Schritte des Anforderns (S13) und/oder des Empfangens (S14) der Servicebeschreibungsdaten (SDD) eine Ausgabe- oder Präsentationsplanungseinheit (PP) verwenden oder in einer solchen durchgeführt werden, insbesondere als multimodale Ausgabe- oder Präsentationsplanungseinheit (PP).

4. Verfahren nach einem der vorangehenden Ansprüche,
bei welchem die Taxonomie ausgebildet ist, graphische, akustische und/oder haptische Ausgabemodalitäten und/oder Ausgabemedien abzudecken.

5. Verfahren nach einem der vorangehenden Ansprüche,
bei welchem die Taxonomie eine Bernsentaxonomie ist oder aufweist.

6. Verfahren nach einem der vorangehenden Ansprüche,
bei welchem ein Vorgang des Synchronisierens mit unimodalen Modalitäten ausgeführt wird, und zwar innerhalb eines jeweiligen Wiedergabeagenten (RA) und außerhalb eines jeweiligen Wiedergabeagenten (RA).

7. Verfahren nach einem der vorangehenden Ansprüche,
bei welchem für jeden der Wiedergabeagenten (RA) ein Wiedergabeagententyp (RAT) bestimmt und/oder gespeichert wird, insbesondere innerhalb der Präsentationsplanungseinheit (PP).

8. Verfahren nach einem der vorangehenden Ansprüche,
bei welchem für jeden der Wiedergabeagenten (RA) ein Präsentationsprotokoll bestimmt und/oder spezifiziert wird, insbesondere innerhalb der Präsentationsplanungseinheit (PP), um in und/oder für eine Präsentation oder Ausgabe verwendet zu werden.

9. Verfahren nach einem der vorangehenden Ansprüche,
bei welchem jedes der Präsentationsprotokolle aufgebaut ist oder gebildet wird von mindestens jeweils einem multimodalen Anteil und einem unimodalen Anteil.

10. Verfahren nach einem der vorangehenden Ansprüche,
bei welchem die Ausgabeaufgabedaten (OT) und/oder die Ausgabeaufgabe (OT) angefordert (S21) und/oder empfangen (S22) werden von einer Dialogverwaltungseinheit (DM), insbesondere mittels der Präsentationsplanungseinheit (PP) und/oder insbesondere in abstrakter Art und Weise.

11. Verfahren nach einem der vorangehenden Ansprüche,
bei welchem der Vorgang des Erzeugens, Empfangens und/oder des Speicherns der Wiedergabeagentendaten (RAD) und insbesondere der Unterprozess des Registrierens (S12) eines Wiedergabeagenten (RA) onlineartig und/oder echtzeitartig durchgeführt werden, insbesondere, wenn ein Wiedergabeagent (RA) neu mit der Mensch-/Maschineschnittstelleneinheit (MMI) verbunden oder in diese eingebracht wird.

12. Verfahren nach einem der vorangehenden Ansprüche,
bei welchem auf bestimmte Ausgabeaufgabedaten (OTD) oder eine bestimmte Ausgabeaufgabe (OT) hin ein Vorgang des Planens (S26) einer Wiedergabestrategie oder einer Ausgabestrategie durchgeführt wird, insbesondere auf der Grundlage der Wiedergabeagentendaten (RAD) in Bezug auf registrierte Wiedergabeagenten (RA), und zwar auf der Grundlage der Ausgabeaufgabedaten (OTD), der Wiedergabeagententypen (RAT) und/oder der jeweiligen Servicebeschreibungsdaten (SDD).

13. Verfahren nach einem der vorangehenden Ansprüche,
bei welchem beim Prozess des Planens (S26) eine Wiedergabestrategie oder Ausgabestrategie dadurch auf flexible Art und Weise ausgeführt wird, dass auf kontinuierliche Art und Weise registrierte und nicht registrierte Wiedergabeagenten (RA) berücksichtigt werden und/oder dass auf kontinuierliche Art und Weise eine Mehrzahl Wiedergabeagenten (RA) berücksichtigt wird, insbesondere solche, die kompetitive Ausgabemöglichkeiten im Hinblick auf gegebene Ausgabeaufgaben (OT) besitzen, und/oder dass auf kontinuierliche Art und Weise eine Mehrzahl Ausgabeagenten (RA) miteinander kombiniert werden, um gemeinschaftlich eine gegebene Ausgabeaufgabe (OT) zu bewerkstelligen.

14. Verfahren nach einem der vorangehenden Ansprüche 12 oder 13,
bei welchem der Prozess des Planens (S26) einer Wiedergabestrategie und/oder einer Ausgabestrategie Präsentationswissen oder Präsentationskenntnisse (PK) berücksichtigt.

15. Verfahren nach einem der vorangehenden Ansprüche 12 bis 14,
bei welchem der Prozess des Planens (S26) einer Wiedergabestrategie und/oder einer Ausgabestrategie Layoutprotokolle (LP), unimodale Wiedergabeprotokolle (UMP) und/oder multimodale Wiedergabeprotokolle (MMP) erzeugt und/oder berücksichtigt.

16. Verfahren nach einem der vorangehenden Ansprüche,
bei welchem unimodale Modalitäten in abstrakter Art und Weise definiert werden, insbesondere gemäß einer festen Taxonomie und/oder einer Onthologie.

17. Verfahren nach einem der vorangehenden Ansprüche, welches ausgebildet ist, Wiedergabeagenten (RA) und/oder Ausgabegeräte zu handhaben, welche der Mensch-/Maschineschnittstelleneinheit (MMI) unbekannt sind und welche insbesondere der Präsentationsplanungseinheit (PP) unbekannt sind.

18. Computerprogrammprodukt, welches eine Computerprogrammeinrichtung aufweist, die ausgebildet ist, das Verfahren zum Betreiben und Steuern der Datenausgabe einer Mensch-/Maschineschnittstelleneinheit nach einem der Ansprüche 1 bis 17 und/oder deren Schritte auszuführen und/oder zu realisieren, wenn es auf einem Computer, einer digitalen Signalverarbeitungseinrichtung und/oder dergleichen ausgeführt wird.

19. Computerlesbares Speichermedium,
welches ein Computerprogrammprodukt nach Anspruch 18 aufweist.

## Revendications

1. Procédé de commande et de contrôle de la sortie de données d'une unité d'interface homme-machine,
comprenant les processus consistant à :
- générer, recevoir (S10, S12, S14) et/ou stocker (S15) des données d'agent de rendu (RAD) ou des données de dispositif de sortie pour au moins un agent de rendu (RA) ou dispositif de sortie devant faire partie de et/ou devant être connecté à ladite unité d'interface homme-machine (MMI) comme dispositif ou destination de sortie possible pour les données de sortie (OD).
- générer, recevoir (S20, S22) et/ou stocker des données de tâche de sortie (OTD) pour les données de sortie (OD) devant être sorties ou rendues par ladite unité d'interface homme-machine (MMI) dans au moins une tâche de sortie (OT) à l'aide d'au moins un agent de rendu (RA) ou dispositif de sortie, et
- sortie ou rendre (S27, S28) des données de sortie (OD) par rapport auxdites données de tâche de sortie (OTD) pour ladite au moins une tâche de sortie (OT),
- dans lequel le processus consistant à générer, recevoir (S10, S12, S14) et/ou stocker (S15) lesdites données d'agent de rendu (RAD) ou données de dispositif de sortie pour un agent de rendu (RA) ou dispositif de sortie comprend un sous-processus consistant à enregistrer (S12) un agent de rendu ou dispositif de sortie respectif devant être nouvellement connecté à ladite unité d'interface homme-machine (MMI) comprenant les étapes consistant à demander (S13) et/ou recevoir (S14) des données de description de service (SDD) pour ledit agent de rendu (RA) ou dispositif de sortie
- dans lequel lesdites données de description de service (SDD) comprennent, sont adaptées pour contenir ou spécifier et/ou sont basées sur une taxinomie de sortie,
- dans lequel lesdites données de description de service (SDD) comprennent, sont adaptées pour contenir ou spécifier, et/ou sont basées sur au moins une ou une pluralité arbitraire de données du groupe de données comprenant ou décrivant des ensembles respectifs de modalités uni-modales, des exigences respectives de synchronisation d'agent, des dispositifs de sortie correspondants respectifs et des contenus respectifs qui peuvent être rendus ou sortis, et
- dans lequel le processus consistant à sortir ou rendre (S27, S28) des données de sortie (OD) est planifié (S24) et/ou réalisé (S27, 528) sur la base desdites données de description de service (SDD) de tous les agents de rendu ou dispositifs de sortie enregistrés et/ou connectés à ladite unité d'interface homme-machine (MMI).

2. Procédé selon la revendication 1,
dans lequel lesdites données de description de service (SDD) comprennent, sont adaptées pour contenir ou spécifier, et/ou sont basées sur la totalité des données du groupe de données comprenant ou décrivant des ensembles respectifs de modalités uni-modales, des exigences respectives de synchronisation d'agent, des dispositifs de sortie correspondants respectifs et des contenus respectifs qui peuvent être rendus ou sortis.

3. Procédé selon la revendication 1,
dans lequel le sous-processus d'enregistrement (S12) et en particulier les étapes consistant à demander (S13) et/ou recevoir (S14) lesdites données de description de service (SDD) impliquent ou sont réalisées dans une unité de planification de sortie ou de présentation (PP), en particulier une unité de planification de sortie ou de présentation (PP) multi-modale.

4. Procédé selon l'une quelconque des revendications précédentes,
dans lequel ladite taxinomie est adaptée pour couvrir les modalités et/ou supports de sortie graphique, acoustique et/ou haptique.

5. Procédé selon l'une quelconque des revendications précédentes,
dans lequel ladite taxinomie est ou comprend une taxinomie de Bernsen.

6. Procédé selon l'une quelconque des revendications précédentes,
dans lequel un processus de synchronisation est effectué avec des modalités uni-modales dans un agent de rendu (RA) respectif et à l'extérieur d'un agent de rendu (RA) respectif.

7. Procédé selon l'une quelconque des revendications précédentes,
dans lequel pour chacun desdits agents de rendu (RA), un type d'agent de rendu (RAT) est déterminé et/ou stocké, en particulier dans ladite unité de planification de présentation (PP).

8. Procédé selon l'une quelconque des revendications précédentes,
dans lequel pour chacun desdits agents de rendu (RA), un protocole de présentation est déterminé et/ou spécifié, en particulier dans ladite unité de planification de présentation (PP), devant être utilisé dans et/ou pour une présentation ou sortie.

9. Procédé selon l'une quelconque des revendications précédentes,
dans lequel chacun desdits protocoles de présentation est constitué par ou se compose d'au moins une partie multi-modale respective et d'une partie uni-modale.

10. Procédé selon l'une quelconque des revendications précédentes,
dans lequel lesdites données de tâche de sortie (OTD) et/ou ladite tâche de sortie (OT) sont demandées (S21) et/ou reçues (S22) depuis une unité de gestion de dialogue (DM), en particulier par ladite unité de planification de présentation (PP) et/ou en particulier d'une manière abstraite.

11. Procédé selon l'une quelconque des revendications précédentes,
dans lequel ledit processus consistant à générer, recevoir et/ou stocker lesdites données d'agent de rendu (RAD) et en particulier le sous-processus consistant à enregistrer (S12) un agent de rendu (RA), est réalisé en ligne et/ou en temps réel, en particulier lorsqu'un agent de rendu (RA) est nouvellement connecté ou incorporé à ladite unité d'interface homme-machine (MMI).

12. Procédé selon l'une quelconque des revendications précédentes,
dans lequel, en fonction des données de tâche de sortie (OTD) données ou d'une tâche de sortie (OT) donnée, un processus consistant à planifier (S26) une stratégie de rendu ou de sortie est réalisé, en particulier sur la base desdites données d'agent de rendu (RAD) pour les agents de rendu (RA) enregistrés, sur la base desdites données de tâche de sortie (OTD), dudit type d'agent de rendu (RAT) et/ou desdites données de description de service (SDD).

13. Procédé selon l'une quelconque des revendications précédentes,
dans lequel ledit processus consistant à planifier (S26) une stratégie de rendu ou de sortie est réalisé de manière flexible en prenant en compte de façon continue les agents de rendu (RA) enregistrés et non enregistrés et/ou en prenant en compte de façon continue une pluralité d'agents de rendu (RA) en particulier ayant des capacités de sortie concurrentes par rapport aux tâches de sortie (OT) données et/ou en combinant de façon continue une pluralité d'agents de rendu (RA), de façon à gérer conjointement une tâche de sortie (OT) donnée.

14. Procédé selon l'une quelconque des revendications 12 ou 14,
dans lequel ledit processus consistant à planifier (S26) une stratégie de rendu et/ou de sortie prend en compte la connaissance de présentation (PK).

15. Procédé selon l'une quelconque des revendications 12 à 14,
dans lequel ledit. processus consistant à planifier (S26) une stratégie de rendu et/ou de sortie génère et/ou prend en compte des protocoles de disposition (LP), des protocoles de rendu uni-modal (UMP) et/ou des protocoles de rendu multi-modal (MMP).

16. Procédé selon l'une quelconque des revendications précédentes,
dans lequel des modalités uni-modales sont définies de façon abstraite, et en particulier conformément à une taxinomie et/ou ontologie fixe.

17. Procédé selon l'une quelconque des revendications précédentes,
qui est adapté pour traiter des agents de rendu (RA) et/ou un dispositif de sortie qui sont inconnus de l'unité d'interface homme-machine (MMI) et en particulier inconnus de l'unité de planification de présentation (PP).

18. Produit de programme informatique,
comprenant un moyen de programme informatique adapté pour effectuer et/ou réaliser le procédé de commande et de contrôle de la sortie de données d'une unité d'interface homme-machine selon l'une quelconque des revendications 1 à 17 et/ou les étapes de celui-ci, lorsqu'il est exécuté sur un ordinateur, un moyen de traitement de signal numérique, et/ou similaire.

19. Support de stockage lisible par ordinateur,
comprenant un produit de programme informatique selon la revendication 18.
